# EUROPEAN PATENT SPECIFICATION

(11) **EP 1 136 241 B1**
(45) Date of publication and mention of the grant of the patent: **21.06.2006**
(21) Application number: 01106262.7
(22) Date of filing: 14.03.2001
(51) Int. Cl.: B29D 11/00

(54) **Apparatus for the removal of contact lenses**
Vorrichtung zur Entnahme von Kontaktlinsen
Dispositif pour enlever des lentilles de contact

(30) Priority: 16.03.2000 EP 00105545
(43) Date of publication of application: 26.09.2001
(73) Proprietor: Novartis AG, 4056 Basel (CH); Novartis Pharma GmbH, 1230 Wien (AT)
(72) Inventor: Stockhorst, Holger, 63762 Grossostheim (DE); Lässig, Günter, 63785 Obernburg (DE); Hagmann, Peter, 63906 Erlenbach am Main (DE)
(74) Representative: Liphardt, Bernd

(56) References cited:
- WO-A-98/57788
- US-A- 5 561 970
- US-A- 5 658 602

## Description

The invention relates to an apparatus for removing contact lenses, especially from a mould half.

In an automatic manufacturing process for contact lenses, particularly disposable lenses that are manufactured in large unit numbers, it is necessary to automatically remove the contact lenses from a mould half. Contact lenses, which are to be manufactured economically in large unit numbers, are preferably manufactured by the so-called mould or full-mould process. In these processes, the lenses are manufactured into their final shape between two mould halves, so that there is no need to subsequently finish the surfaces of the lenses, nor to finish the edges. Mould processes are described for example in PCT patent application no. WO/87/04390 or in EP-A 0 367.513.

The contact lenses produced in this manner are moulded parts having little mechanical stability and a water content of more than 60 % by weight. After manufacture, the lens is metrologically checked, then packaged and subjected to heat sterilisation at 121°C in an autoclave.

In these known mould processes, the geometry of the contact lens to be manufactured is defined by the mould cavity. The edge of the contact lens is likewise formed by the mould which normally consists of two mould halves. The geometry of the edge is defined by the contour of the two mould halves in the area in which they make contact.

To manufacture a contact lens, first of all a certain amount of the fluid starting material is placed in the female mould half. Afterwards, the mould is closed by placing the male mould half thereon. Normally, a surplus of starting material is used, so that, when the mould is closed, the excess is expelled into an overflow area adjacent to the outer mould cavity. The subsequent polymerisation or crosslinking of the starting material takes place by radiation with UV light, or by heat action, or by another non-thermal method.

Subsequently, the contact lenses thus produced must be removed from the mould halves, preferably from the female mould halves. To do this, a gripper is provided for example. This is moved in the direction of the mould half and removes the lenses from the mould half by applying suction to the lenses with a vacuum as in WO-A-985778. After removing the lenses, the gripper arm moves into another position, so that further procedures can be carried out, such as drying of the contact lenses on the gripper, checking of the contact lens using an image-processing system, placing the contact lenses in a package, and rinsing and drying of the gripper itself. To this end, the gripper may be, for example, star-shaped, and in this configuration represents the connecting link between manufacturing the contact lenses and primary packaging. Only the lenses that are centred by the gripper and grasped smoothly can be checked by the image-processing system and subsequently deposited In the package. Thus, the accurate removal of lenses by the gripper is an essential prerequisite to attaining a high yield of the apparatus.

Usually prior to removal from the mould half, the contact lenses are first of all loosened and, if desired, also inverted from the male to the female mould half, since the actual removal of the contact lenses is preferably effected from the female mould half. To enable the apparatus to be operated most economically, several mould halves, preferably a figure of 10, can be held in one tool and grasped together by one gripper arm, which accordingly has 10 grippers.

To remove the contact lens from such a tool, the gripper arm moves downwards. The contact lens is suctioned onto the gripper by a vacuum. To remove the contact lens, a vacuum of ca. -0.3 bars (measured on the gripper) is required. The distance d between a gripper and a mould half, which is measured between the contour edge of a mould half and the end face of the gripper, should be preferably more than 0.5 mm, since otherwise damage may occur on the gripper or on the mould half. In order to ensure an exact adjustment of the gripper over the females mould halves in question, the gripper is aligned by moving towards the stop of the contour edge of the mould half, then elevated by a specific amount and subsequently fixed. However, this is extremely complex and relatively prone to errors.

The invention is based on the problem of increasing the distance between the gripper and the mould half whilst maintaining the gripping power, so as to avoid damage to the contact lenses and the mould half, and of enabling the gripper to be simply aligned in relation to the mould half. In addition, servicing of the apparatus should be simplified.

The invention solves this problem with the features indicated in claim 1. As far as further essential refinements are concerned, reference is made to the dependent claims.

By inserting a spacer which is placed between the mould half and the gripper, it is no longer necessary to exactly align the gripper in relation to the mould half, thereby enabling simpler servicing and assembly of the gripper to take place. In addition, there is improved centring of the contact lenses on the gripper, thus increasing accuracy of image processing.

Further details and advantages of the invention may be seen from the description that follows and the drawing. In the drawing,
- Fig. 1: shows a sectional view of a gripper;
- Fig. 2: shows a schematic illustration of an embodiment of a spacer according to the invention between a gripper and a mould half;
- Fig. 3: shows a schematic illustration of a second embodiment of a spacer according to the invention between a gripper and a mould half;
- Fig. 4: shows a plan view of a plate with conical bores;
- Fig. 5: shows a schematic illustration of a further embodiment of an end region of the gripper;
- Fig. 6: shows a schematic illustration of a third embodiment of a spacer according to the invention between a gripper and a mould half.

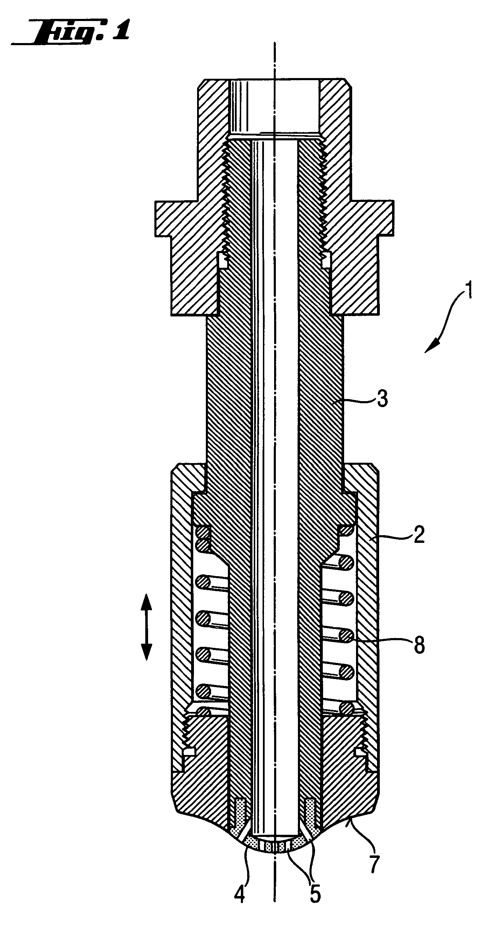

Figs. 1, 2, 3, 5 and 6 are illustrative and do not lie within the scope of the invention.

A gripper illustrated in fig. 1 consists of an outer gripping sleeve 2 and an inner section 3 of the gripper. According to the invention the gripping sleeve 2 and the inner section 3 are formed in one piece, whereby there is no movement of the sleeve 2 and inner section 3 relatively to each other. The inner section 3 has a convex end 4, which is equipped with bores 5 that are preferably ring-shaped in order to suck up the contact lens 6. The curved end face 7 of the sleeve 2 is connected to this end region 4 of the inner section 3 of the gripper, the curve of this end face 7 being preferably concave. In a two-part design of the gripper 1, a compression spring 8 may be provided to support the inner section 3 or the gripping sleeve 2. The inner section 3 of the gripper is connected to a vacuum system which is not illustrated in detail here, and can be pressurised with a vacuum.

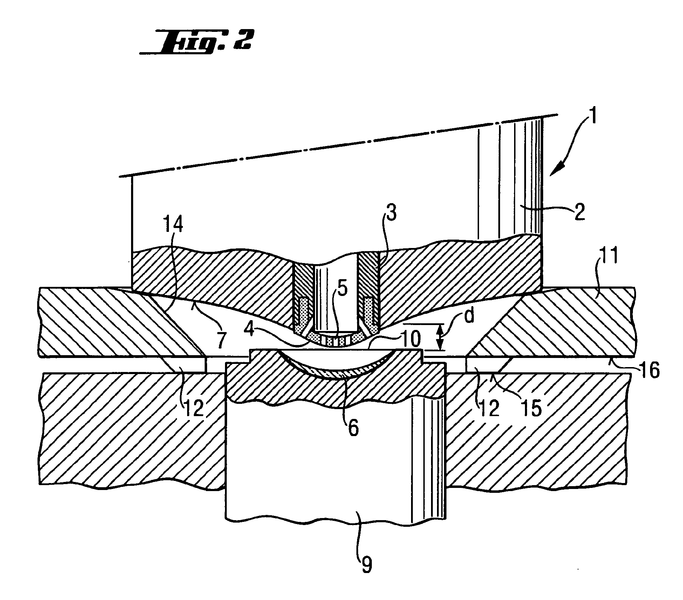

As is apparent from fig. 2, the gripper 1 is positioned above a female mould half 9 in the gripping position. If a movable sleeve 2 is provided, by moving the gripping sleeve 2 upwards, it is ensured that the sleeve 2 does not touch the contour edge 10 of the mould half 9, which could lead to damage. The gripper 1 remains in this position first of all for approximately one second. During this time, the contact lens 6 should "float" in the female mould half 9, i.e. become correctly centred. On the other hand, vibration on the gripper 1 should die down. This ensures that the contact lens 6 is received by the gripper 1 in a central position. After this rest phase, the vacuum is applied. The gripper 1 stays in the gripping position for another ca. one second, before it moves upwards again. During this time, all contact lenses 6 located in the female mould halves 9 of a tool should be safely transferred. After transfer of the lenses, the inner section 3 of the gripper moves back up to its starting position and the whole gripper 1 proceeds to the next workstation.

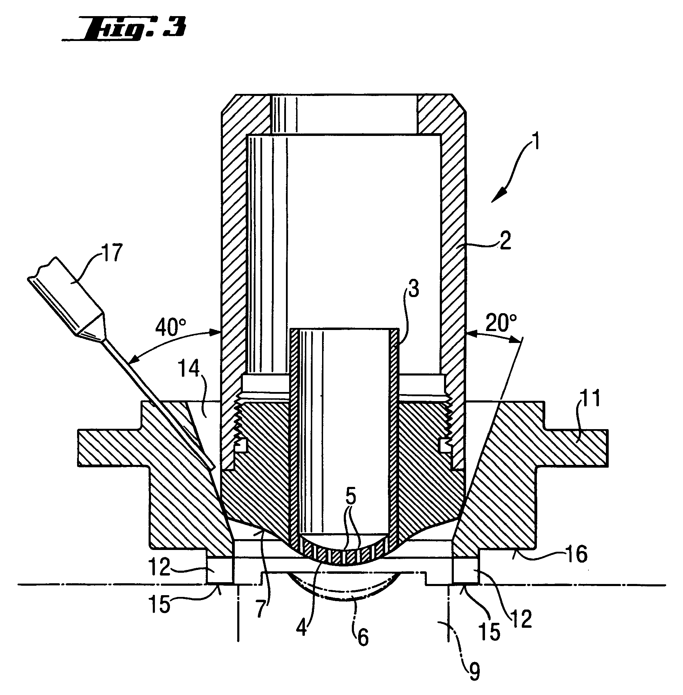

In accordance with the invention, a spacer 11 is provided between the mould half 9 and the end region 4, 7 of the inner section 3 of the gripper. With this, the distance d between the mould half 9 and the gripper 1 is increased. The distance d between the gripper 1 and the mould half 9 is measured between the contour edge 10 of the mould half 9 and the end face 7 of the gripper 1. The spacer 11 is shaped so that it seals the inner section 3 of the gripper in the gripping position towards the exterior. A stop is preferably provided for this, defining the end position for suction of the contact lens. The gripper 1 is moved against it. The spacer 11 is advantageously a ring shape. In particular, there may be a provision for the inner area of the spacer 11 to be a conical shape, as illustrated in fig. 3. When the gripper 1 is lowered into the gripping position, it rests on the cone cover to form a solid stop and thus a seal, without any precise alignment. The height tolerance of the gripper 1 lies in the range 200 - 300 µm. Especially when the gripping sleeve 2 is of a movable design, this tolerance can be easily balanced by shifting the outer sleeve 2. In contrast, there is no seal towards the mould half 9, so that when the vacuum is applied flux can develop. To enable a regular flow to take place in the direction of the end region 4 of the inner section 3 of the gripper, the spacer 11 is provided according to the invention with cut-outs 12. The spacer 11 may be formed in one piece or in many parts. The cut-outs 12 may be formed as bores, but slits or other geometric shapes are also possible. If pressure is applied by vacuum to the gripper 1, the effect of the vacuum increases through the spacer ring 11, since a defined amount of pressure is exerted on the contact lens. The end region 4 of the inner section 3 of the gripper pulls the contact lens 6 and the contact lens 6 then lies centrally around the end region 4 of the gripper 1. A distance d of 0.5 mm to 1.5 mm, preferably 1 mm, is provided between the contour edge 10 of the mould half 9 and the end region 4 of the gripper 1. This ensures that the gripper 1 no longer touches the mould half 9 and the contact lens 6 and damage is thus avoided.

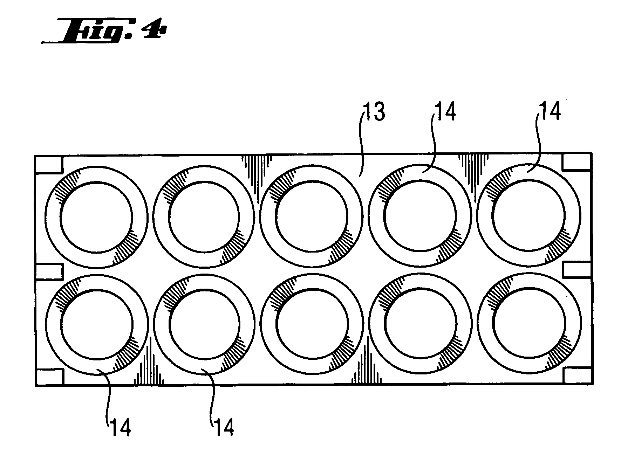

In particular when several mould halves 9 are grasped on a tool holder, is it advantageous for the spacer 11 to be formed as a plate 13 which is equipped with conical bores 14. This is illustrated schematically in fig. 4, whereby the bores 14 then each form the inner region of a spacer 11. As is evident from fig. 3, the end faces of the bores 14 may have studs 15 which serve as a buffer surface on the tool holder and at the same time give a certain distance. In this instance, the spaces between the studs represent the cut-outs 12 of the spacer 11. Because of these studs 15, the end face 16 of the plate 13 hovers ca. 1 mm, corresponding to the height of the studs, above the mould halves 9, thereby minimising the danger of damage. After the plate 13 with the bores 14 has been placed on the tool holder, the gripper moves into the conical rings 14. When the gripper 1 is designed in particular with a rigid inner section 3 and a movable sleeve 2, high tolerances are cushioned by the sleeve 2 sliding back. As soon as the gripper 1 touches the cone cover, the gripper is in the gripping position. Air is drawn through the gap 12 between the studs 15 when the vacuum is applied, and the contact lens 6 is sucked up. After removing the lenses 6, the gripper 1 is raised again and the plate 13 is subsequently moved again into its starting position.

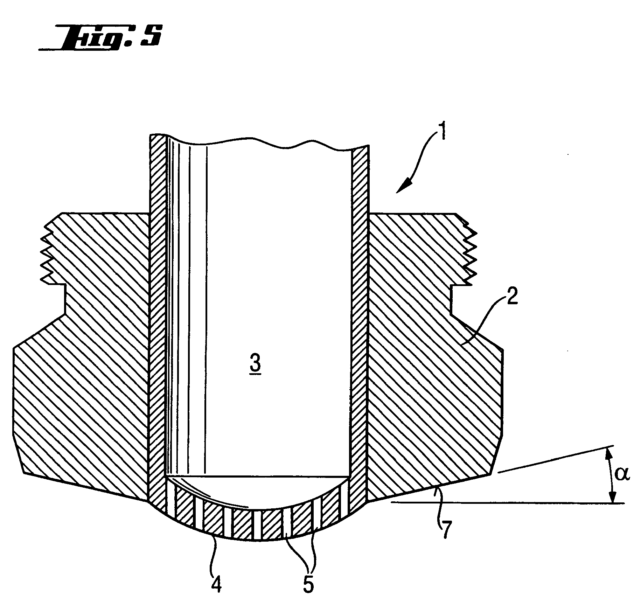

Because of the strong suction of the contact lens 6, it is stretched beyond the end region 4 of the inner section 3 of the gripper. This leads to possible flaws on the edge of the contact lens 6 being more reliably recognised by the subsequent automatic image processing system. As is evident from fig. 5, this effect can be strengthened by a conical tapering of the end face 7 of the gripper 1, which diverges from a curved line. The inclination of the face 7 towards the horizontal is determined by the angle α.

Furthermore, a nozzle 17 may be integrated into the spacer 11 in order to moisten the contact lens prior to removal, thus facilitating removal of the contact lens.

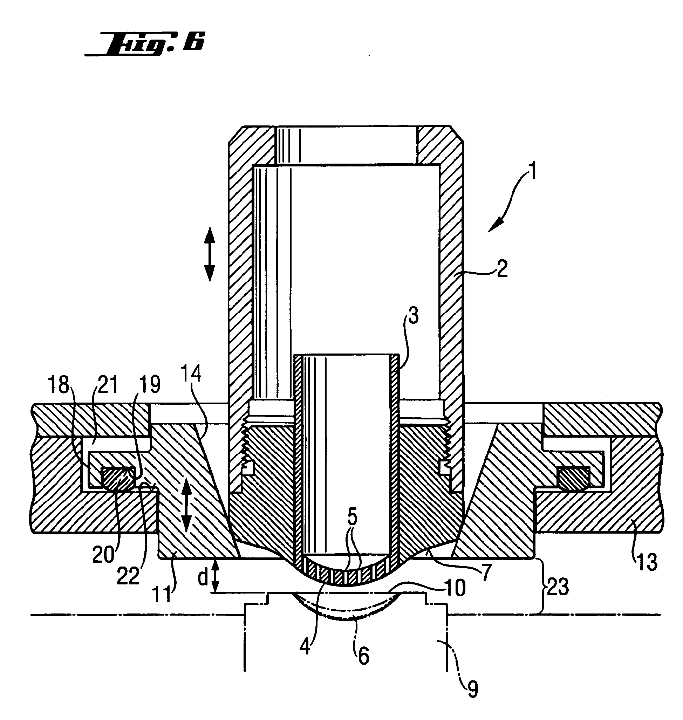

A further embodiment of a spacer 11 is illustrated in fig. 6. Again, the inner area of the spacer 11 is conical, but in the outer area it has an annular lug 18 with a slot 19 for receiving an elastic O-ring 20. The spacers 11 are in turn stored in a support plate 13, which is equipped with slots 21 to receive the lugs 18. The O-ring rests directly on the base 22 of the slot 21, thereby providing elastic support of the spacer 11. As the gripper 1 enters the spacer 11, it is possible to balance the manufacturing tolerances. In this embodiment, the plate 13 does not rest on the tool holder by means of studs, but is placed directly on stop faces not illustrated here, which are attached to the tool holder and are spaced from the contour edge of the mould half. In order to enable air to be supplied to the contact lens in this embodiment, the cut-outs 12 are formed as ring slots 23. This embodiment in particular enables a simpler assembly of the spacers 11 to take place in the plate 13, since manufacturing tolerances are balanced by the elastic support means.

In all, the invention offers the possibility of increasing the gap between the mould half and the gripper without decreasing the gripping strength. In this way, damage to the mould half or the contact lens is avoided, and alignment of the gripper to the mould half is simplified. Moreover, the invention enables flaws in the periphery of the contact lens to be noticed more easily, since owing to the greater flux acting on the contact lens, the latter undergoes greater expansion in the end region of the gripper, thereby enabling possible flaws to be discerned more easily. This can be further enhanced by a conical shape at the end face of the gripper. In addition, the contact lens is centred more accurately on the gripper, whereby image processing is likewise improved.

## Claims

1. Apparatus for removing contact lenses especially from a storage container or a mould half (9), with a gripper comprising
an inner section (3) having an end region (4) adapted to the shape of the contact lens, said end region (4) having bores (5) for sucking up the lens when vacuum is applied;
and an outer gripping sleeve (2) wherein the sleeve (2) and the inner section (3) are formed in one piece whereby there is no movement of the sleeve (2) and the inner section (3) with respect to each other,
**characterised in that** between the gripper and the storage container or the mould half (9) there is a spacer(11) formed as one piece or in many parts, the spacer (11) having an airtight seal to the outer gripping sleeve and being equipped with cut-outs (12) for sucking in air.

2. Apparatus for removing contact lenses according to claim 1, in which the spacer has a ring-shaped inner region.

3. Apparatus for removing contact lenses according to claim 2, in which the inner area of the ring is a conical shape.

4. Apparatus according to one or more of claims 1 to 3, in which a number of spacers (11) are held on a plate(13).

5. Apparatus for removing contact lenses according to claim 3 or 4, in which studs (15) are provided on the side of the spacer facing the contact lens, and the cut-outs (12) represent the gap between the studs (15).

6. Apparatus according to claim 4, in which the spacers are elastically held in the plate by an O-ring.

7. Apparatus according to claim 6, in which the cut-outs (12) are formed as ring slots.

8. Apparatus according to one or more of claims 1 to 7, in which the convex end region of the gripper changes into a conical edge.

## Patentansprüche

1. Vorrichtung zur Entfernung von Kontaktlinsen, insbesondere aus einem Aufbewahrungsbehälter oder einer Formhälfte (9) mit einem Greifer, umfassend
einen inneren Abschnitt (3) mit einem Endbereich (4), der an die Form der Kontaktlinse angepaßt ist, wobei der Endbereich (4) Bohrungen (5) zum Ansaugen der Linse aufweist, wenn Vakuum angelegt wird;
und eine äußere Griffhülle (2), wobei die Hülle (2) und der innere Abschnitt (3) aus einem Stück geformt sind, wobei sich die Hülle (2) und der innere Abschnitt (3) in bezug aufeinander nicht bewegen,
**dadurch gekennzeichnet, daß** sich zwischen dem Greifer und dem Aufbewahrungsbehälter oder der Formhälfte (9) ein Abstandhalter (11) befindet, der aus einem Stück oder aus mehreren Teilen geformt ist, wobei der Abstandhalter (11) einen luftdichten Verschluß zu der äußeren Griffhülle aufweist und mit Unterbrechern (12) zum Ansaugen von Luft ausgestattet ist.

2. Vorrichtung zur Entfernung von Kontaktlinsen nach Anspruch 1, wobei der Abstandhalter einen ringförmigen inneren Bereich aufweist.

3. Vorrichtung zur Entfernung von Kontaktlinsen nach Anspruch 2, wobei die Innenfläche des Ringes eine konische Form aufweist.

4. Vorrichtung nach einem der Ansprüche 1 bis 3, wobei eine Vielzahl von Abstandhaltern (11) auf einer Platte (13) gehalten wird.

5. Vorrichtung zur Entfernung von Kontaktlinsen nach Anspruch 3 oder 4, wobei Ständer (15) an der Seite des Abstandhalters, der der Kontaktlinse zugewandt ist, bereitgestellt werden, und die Unterbrecher (12) den Zwischenraum zwischen den Ständern (15) darstellen.

6. Vorrichtung nach Anspruch 4, wobei die Abstandhalter durch einen O-Bäng elastisch in der Platte gehalten werden.

7. Vorrichtung nach Anspruch 6, wobei die Unterbrecher (12) als Ringschlitze geformt sind.

8. Vorrichtung nach einem oder mehreren der Ansprüche 1 bis 7, wobei sich der konvexe Endbereich des Greifers in eine konische Kante umwandelt.

## Revendications

1. Appareil pour retirer des lentilles de contact, en particulier d'un récipient de stockage ou d'un demi-moule (9), avec un dispositif de préhension comprenant :
une section interne (3) ayant une région terminale (4) adaptée à la forme de la lentille de contact, ladite région terminale (4) ayant des trous (5) pour aspirer la lentille par succion lorsqu'un vide est appliqué ;
et un manchon de préhension externe (2) dans lequel le manchon (2) et la section interne (3) sont formés d'une seule pièce, grâce à quoi il n'y a pas de mouvement du manchon (2) et de la section interne (3) l'un par rapport à l'autre,
**caractérisé en ce qu'**entre le dispositif de préhension et le récipient de stockage ou le demi-moule (9) se trouve un espaceur (11) formé en une seule pièce ou en plusieurs parties, l'espaceur (11) ayant un joint étanche à l'air vis-à-vis du manchon de préhension externe et étant équipé de parties découpées (12) pour aspirer l'air par succion.

2. Appareil pour retirer des lentilles de contact selon la revendication 1, dans lequel l'espaceur a une région interne en forme d'anneau.

3. Appareil pour retirer des lentilles de contact selon la revendication 2, dans lequel la zone interne de l'anneau est de forme conique.

4. Appareil selon une ou plusieurs des revendications 1 à 3, dans lequel un certain nombre d'espaceurs (11) sont maintenus sur une plaque (13).

5. Appareil pour retirer des lentilles de contact selon la revendication 3 ou 4, dans lequel des goujons (15) sont fournis sur le côté de l'espaceur faisant face à la lentille de contact, et les parties découpées (12) représentent l'intervalle entre les goujons (15).

6. Appareil selon la revendication 4, dans lequel les espaceurs sont maintenus de manière élastique sur la plaque par un joint torique.

7. Appareil selon la revendication 6, dans lequel les parties découpées (12) sont sous forme de fentes circulaires.

8. Appareil selon une ou plusieurs des revendications 1 à 7, dans lequel la région d'extrémité convexe du dispositif de préhension est modifiée en un bord conique.
